# EUROPEAN PATENT SPECIFICATION

(11) **EP 3 907 972 B1**
(45) Date of publication and mention of the grant of the patent: **05.08.2026**
(21) Application number: 21182558.3
(22) Date of filing: 13.05.2011
(51) Int. Cl.: H04L 65/401, H04W 60/00, H04W 76/20, H04W 84/12, H04L 65/1016, H04L 65/1069, H04L 65/1073, H04L 65/65, H04W 36/00, H04W 76/16, H04W 84/04, H04W 88/06, H04W 28/08

(54) **METHOD AND SYSTEM OF MANAGING VOICE CALL AND IP MEDIA SESSIONS IN A WIRELESS NETWORK ENVIRONMENT**
VERFAHREN UND SYSTEM ZUR VERWALTUNG VON SPRACHANRUFEN UND IP-MEDIENSITZUNGEN IN EINER DRAHTLOSNETZWERKUMGEBUNG
PROCÉDÉ ET SYSTÈME DE GESTION D'APPELS VOCAUX ET DE SESSIONS IP MULTIMÉDIA DANS UN ENVIRONNEMENT DE RÉSEAU SANS FIL

(30) Priority: 13.05.2010 IN 1361CH2010
(43) Date of publication of application: 10.11.2021
(62) Divisional of application: 19185562.6
(73) Proprietor: Samsung Electronics Co., Ltd., Suwon-si, Gyeonggi-do 16677 (KR)
(72) Inventor: JAMADAGNI, Satish Nanjunda Swamy, 560037 Bangalore (IN); HIRISAVE, Pradeep Krishnamurthy, 560037 Bangalore (IN); GANAPATHI, Sarvesha Anegundi, 560037 Bangalore (IN)
(74) Representative: Nederlandsch Octrooibureau

(56) References cited:
- "3rd Generation Partnership Project;Technical Specification Group Services and System Aspects;IP Flow Mobility and seamless WLAN offload; Stage 2(Release 10)", 3GPP DRAFT; 23261-100, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. SA WG2, no. Kyoto; 20100510, 4 May 2010 (2010-05-04), XP050434341
- "3rd Generation Partnership Project; Technical Specification Group Services and System Aspects; Architecture enhancements for non-3GPP accesses (Release 9)", 3GPP STANDARD; 3GPP TS 23.402, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, no. V9.4.0, 25 March 2010 (2010-03-25), pages 1 - 198, XP050402067
- "3rd Generation Partnership Project; Technical Specification Group Services and System Aspects; Multi access PDN connectivity and IP flow mobility (Release 9)", 3GPP STANDARD; 3GPP TR 23.861, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. SA WG2, no. V1.3.0, 10 February 2010 (2010-02-10), pages 1 - 48, XP051123733

## Description

### [Technical Field]

The present invention relates to the field of wireless communication, and more particularly relates to handling voice call and IP media sessions in a wireless network environment.

### [Background Art]

Generic access network (GAN) is a telecommunication system that extends mobile voice, data and IP multimedia subsystem/session initial protocol (IMS/SIP) applications over IP networks. In GAN, a user equipment (UE) upon detecting a wireless LAN (e.g., a GAN cell), establishes a secure IP connection through a gateway to a server called a GAN controller on the carriers' network. On the cellular network, the UE communicates over the air with the base station to servers in the core network of the carrier. An advantage of GAN system is that, the UE is allowed to migrate from the IP to cellular coverage. Thus, when the UE moves from a GSM to 802.11 network, it appears to the UE as if it is on a different base station.

Today with operators hosting multiple services and other services being hosted by third parties on the Internet, the operators prefer to selectively handover certain IP media sessions to the GAN cell when available.

"3rd Generation Partnership Project; Technical Specification Group Services and System Aspects;IP Flow Mobility and seamless WLAN offload; Stage 2(Release 10)", 3GPP DRAFT; 23261-100, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. SA WG2, no. Kyoto; 20100510, 4 May 2010 (2010-05-04), XP050434341, discloses s a mechanism for a UE to simultaneously connect to 3GPP access and WLAN and exchange different IP flows belonging to the same PDN connection through different accesses. The mechanism also enables seamless IP flow mobility, with IP flows belonging to the same or different applications being moved seamlessly between a 3GPP access and WLAN.

"3rd Generation Partnership Project; Technical Specification Group Services and System Aspects; Architecture enhancements for non-3GPP accesses (Release 9)", 3GPP STANDARD; 3GPP TS 23.402, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, no. V9.4.0, 25 March 2010 (2010-03-25), pages 1-198, XP050402067, discloses the stage 2 service description for providing IP connectivity using non-3GPP accesses to the Evolved 3GPP Packet Switched domain. In addition, for E-UTRAN and non-3GPP accesses, the specification describes the Evolved 3GPP PS Domain where the protocols between its Core Network elements are lETE-based.

"3rd Generation Partnership Project; Technical Specification Group Services and System Aspects; Multi access PDN connectivity and IP flow mobility (Release 9)", 3GPP STANDARD; 3GPP TR 23.861, 3RD GENERATION PARTNERSHIP PROJECT (3GPP), MOBILE COMPETENCE CENTRE ; 650, ROUTE DES LUCIOLES ; F-06921 SOPHIA-ANTI POLIS CEDEX ; FRANCE, vol. SA WG2, no. VI.3.0, 10 February 2010 (2010-02-10), pages 1-48, XP051123733, discloses scenarios, requirements and solutions for UEs with multiple interfaces which will simultaneously connect to 3GPP access and one, and only one, non-3GPP access. Solutions to be studied include the possibility of dynamically routing to specific accesses individual flows generated by the same or different applications belonging to the same PDN connection. The study of solutions to support routing of different PDN connections through different access systems is also in the scope of this TR. This study item also investigates the mechanisms for provisioning the UE with operator's policies for multi access PDN connectivity and flow mobility.

### [Disclosure]

### [Technical Problem]

However, the GAN system does not support simultaneous access across different RATs like GERAN and GAN. So, when a GAN cell is detected, the UE attaches to the GAN cell and voice and IP media sessions of the UE are transferred to the GAN. Currently, there is no provision to selectively offload IP media data streams to the GAN while continuing with ongoing voice call (e.g., circuit switched network calls) on the existing GERAN/UTRAN.

### [Technical Solution]

According to one aspect of the present invention, methods as defined in claims 1,2 and 5 are provided.

According to another aspect of the present invention, apparatuses as defined in reclaims 2, 4 and 6 are provided.

### [Description of Drawings]

Figure 1 is a block diagram of a wireless communication system for managing voice call and IP media sessions, according to one embodiment.
Figure 2 is a process flowchart of an exemplary method of managing video call and/or IP media sessions in a wireless communication environment, according to one embodiment.
Figure 3 is a flow diagram illustrating an exemplary method of indicating decision to selectively offload IP media session to a generic access network (GAN) cell, according to one embodiment.

The drawings described herein are for illustration purposes only and are not intended to limit the scope of the present disclosure in any way.

### [Mode for Invention]

The present invention provides a method and system for managing voice call and IP media sessions in a wireless communication environment. In the following detailed description of the embodiments of the invention, reference is made to the accompanying drawings that form a part hereof, and in which are shown by way of illustration specific embodiments in which the invention may be practiced. These embodiments are described in sufficient detail to enable those skilled in the art to practice the invention, and it is to be understood that other embodiments may be utilized and that changes may be made without departing from the scope of the present invention. The following detailed description is, therefore, not to be taken in a limiting sense, and the scope of the present invention is defined only by the appended claims.

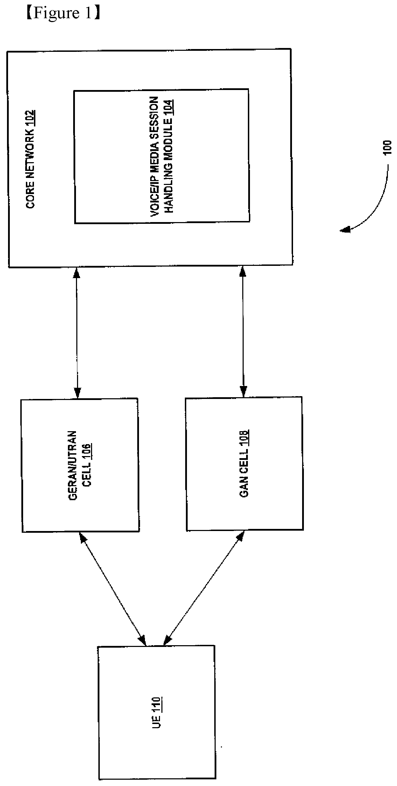

Figure 1 is a block diagram of a wireless communication system 100 for managing voice call and IP media sessions, according to one embodiment. In Figure 1, the wireless communication system 100 includes a core network 102, a GERAN/UTRAN cell 106 (also referred as first network cell) associated with a preferred RAT, a GAN cell 108 (also referred as second network cell) associated with a RAT of different type, and a user equipment (UE) 110.

The core network 102 serves the UE 110 via the GERAN/UTRAN cell 106 and/or the GAN cell 108. The GERAN/UTRAN cell 106 is configured to provide voice call and/or IP media service to the UE 110 when the UE 110 is attached to the GERAN/UTRAN cell 106. When the UE 110 is attached to the GAN cell 108, the GAN cell 108 may be configured to provide data streams associated with the IP media service from the core network 102.

For the purpose of illustration, consider that, the UE 110 is registered with the GERAN/UTRAN cell 106 and the GAN cell 108. Also, a video call and IP media sessions are ongoing on the UE 110 and the core network 102 over the GERAN/UTRAN cell 106. In such case, the video/IP media session handling module 104 determines whether the UE 110 has selective IP media sessions offloading capabilities. In one embodiment, the UE 110 indicates its IP media session offloading capabilities to the core network 102 when registering for video call/IP media services with the core network 102.

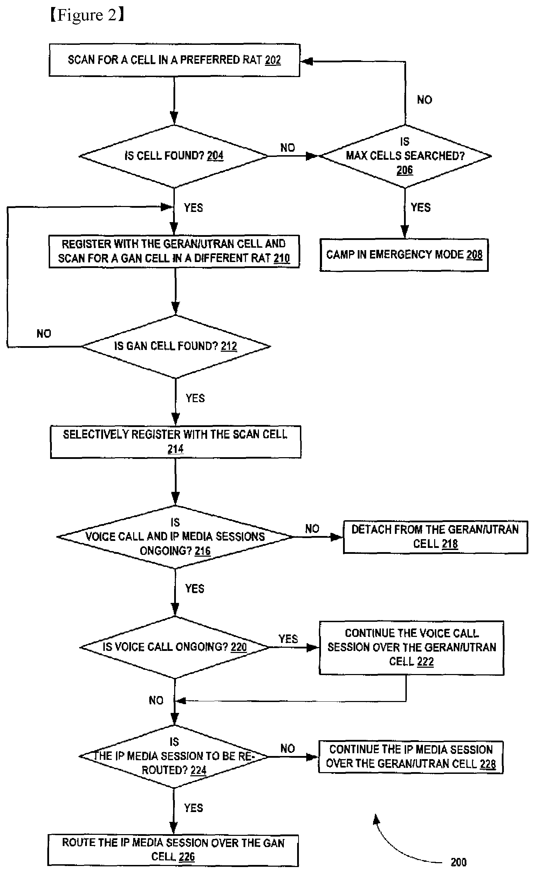

If the UE 110 has offloading capabilities, the handling module 104 selects one or more of the IP media sessions or its portions for offloading to the GAN cell 108. The handling module 104 then routes data streams associated with the selected IP media session(s) via the GAN cell 108 while the remaining IP sessions and the voice call is provisioned over the GERAN/UTRAN cell 106. This helps mitigate data load on the GERAN/UTRAN cell 106. The present invention provides a mechanism for data splitting at a access mode level to maintain multiple streams, where policy to send different application data streams on different RATs is indicated to an logical link control (LLC) entity. The LLC entity then maps the data streams from a particular application to a particular LLC to access mode SAPI. The policy information can then be passed to the LLC from sub-network dependent convergence protocol (SNDCP) layer. The process of handling voice call/ IP media session call is described in greater in description of Figure 2.

Figure 2 is a process flowchart 200 of an exemplary method of managing video call and/or IP media sessions in a wireless communication environment, according to one embodiment. At step 202, a cell is scanned in a preferred radio access technology (RAT) such as GERAN and UTRAN. At step 204, it is determined whether any cell is found in the preferred RAT during scanning. If no cell is found, then at step 206, it is determined whether maximum number scans are performed. If maximum number of scans is performed, then at step 208, any cell of a given RAT is used for camping in an emergency mode, else the steps 202 and 204 are repeated.

If, at step 204, it is determined that a cell is found, then at step 210, the UE 110 registers with the GERAN/UTRAN cell 106. Also, at step 210, the UE 110 scans for a GAN cell in another RAT. This is performed irrespective of whether the UE 110 has successfully registered with the GERAN/UTRAN cell 106. At step 212, it is determined any GAN cell is found in another RAT during the scanning operation. If any GAN cell is found, then at step 214, the UE 110 selectively registers with the GAN cell 108, else step 210 is repeated. It can be noted that, the UE 110 stays attached to the GERAN/UTRAN cell 106 and simultaneously latches onto the GAN cell 108.

At step 216, it is determined whether video call and one or more IP media sessions are simultaneously ongoing on the UE 110 over the GERAN/UTRAN cell 106. If the voice call and one or more IP media sessions are not ongoing, then at step 218, the UE 110 detaches from the GERAN/UTRAN cell 106. If the voice call and one or more IP media sessions are ongoing simultaneously, then at step 220, it is determined whether a voice call is ongoing over the GERAN/UTRAN cell 106. If it is determined true, then at step 222, the voice call is provisioned on the GERAN/UTRAN cell 106 and step 224 is performed.

At step 224, it is determined whether any of the IP media sessions to be offloaded on the GAN cell 108. If the IP media sessions to be offloaded on the GAN cell 108, then at step 226, data streams of the one or more IP media sessions are routed over the GAN cell 108. Otherwise, at step 228, the ongoing IP media sessions are provisioned over the GERAN/UTRAN cell 106. Thus, both the video call and IP media sessions are provisioned simultaneously over the GERAN/UTRAN cell 106 and the GAN cell 108 respectively by selectively offloading one or more IP media sessions or its parts to the GAN cell 108. To achieve this, a non-access stratum (NAS) entity has to identify two active cells simultaneously in a GAN/GERAN/UTRAN network and maintain two active states of the GERAN/UTRAN cell and the GAN cell. This involves signalling (e.g., RAU, measurement reports, etc.) for GAN and GERAN in SAPI-1 and defining a new SAPI and thus maintaining simultaneous active states of the GERAN/UTRAN cell and the GAN cell

In accordance with the one or more embodiments described above, the core network 102 may send a paging message to the UE 110 over the GERAN/UTRAN cell 106 or the GAN cell 108. If the paging message is for voice call connection, the GERAN/UTRAN cell 106 is used for provisioning the voice call connection. If the paging message is for IP media session, then the UE 110 shall respond with the paging response based on the intimation by the core network 102. In both the above cases, the core network 102 may choose to page the UE 110 in either of the cells 106 or 108 and specifies, in the page message, a cell through which the UE 110 shall respond to the page message.

When uplink data needs to be transferred, the UE remains latched onto the GERAN/UTRAN cell 106 and the GAN cell 108 and then offloads the entire IP media session or a portion of the IP media session to the GAN cell or continues with the transmission of data over the GERAN/UTRAN cell 106 based on order from the core network 102.

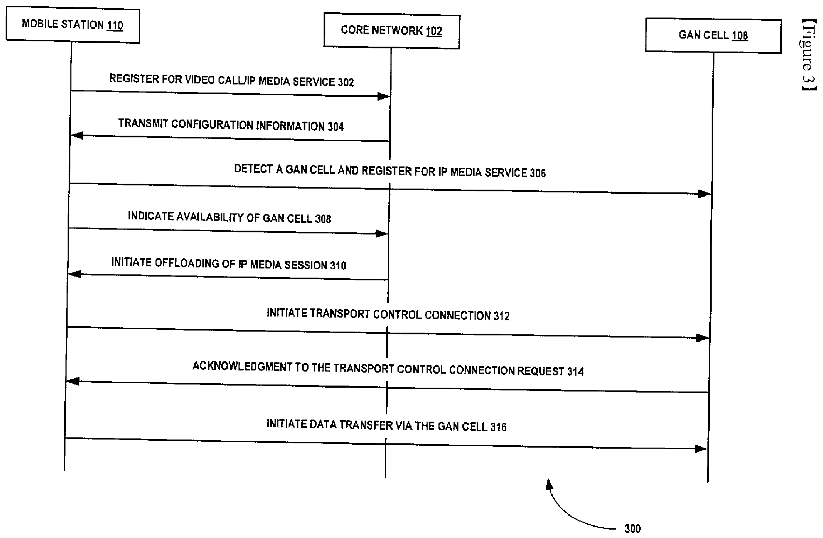

Figure 3 is a flow diagram 300 illustrating an exemplary method of indicating decision to selectively offload IP media session to a generic access network (GAN) cell, according to one embodiment. At step 302, the mobile station 110 registers for video call/IP media services and also indicates selective IP media session offloading capabilities to the core network 102. At step 304, the core network 102 communicates configuration information associated with offloading IP media session(s) based on the selective IP media session offloading capabilities. At step 306, the mobile station 110 detects a GAN cell 108 and registers for IP media service only with the GAN cell 108 if the video call and IP media sessions are ongoing simultaneously via the GERAN/UTRAN cell 106.

At step 308, the mobile station 110, upon successful registration, indicates availability of the GAN cell 108 for offloading IP media session data streams to the core network 102. The IP media offloading decisions are conveyed between the core network 102 and the UE 110 and vice versa using a new NAS level signalling message. Accordingly, at step 310, the core network 102 initiates offloading of the IP media session(s) on to the GAN cell 108 from the GERAN/UTRAN cell 106. At step 312, the mobile station 110 initiates a transport control connection with the GAN cell 108. At step 314, the GAN cell acknowledges to the TC connection message. Finally, at step 316, the mobile station 110 initiates data transfer associated with IP media session with the core network 102 via the GAN cell 108 (e.g., by sending URLC_UNITDATA). This data transfer continues over the GAN cell 108 till the mobile station 110 terminates the session or next session starts.

The present embodiments have been described with reference to specific example embodiments, it will be evident that various modifications and changes may be made to these embodiments without departing from the various embodiments. Furthermore, the various devices, modules, selectors, estimators, and the like described herein may be enabled and operated using hardware circuitry, for example, complementary metal oxide semiconductor based logic circuitry, firmware, software and/or any combination of hardware, firmware, and/or software embodied in a machine readable medium. For example, the various electrical structure and methods may be embodied using transistors, logic gates, and electrical circuits, such as application specific integrated circuit.

## Claims

1. A method of a user equipment, UE, in a communication system, comprising:
establishing (204) a first connection with a first cell (106) using a first access technology;
transmitting (302), to the first cell via the first connection, capability information on communication with a second cell using a second access technology, wherein the second access technology is different from the first access technology;
receiving (222) first data from the first cell via the first connection;
receiving (304) configuration information related to the second cell using the second access technology, from the first cell via the first connection;
establishing (212, 214, 306) a second connection with the second cell using the second access technology based on the configuration information; and
receiving (226, 316) second data from the second cell via the second connection while the first data is received from the first cell,
wherein the first cell and the second cell are active for the UE.

2. The method of claim 1,
wherein a part of the second data is offloaded from a part of the first data.

3. A user equipment, UE, in a communication system, comprising:
a memory; and
at least one processor coupled to the memory,
wherein the at least one processor is configured to:
establish a first connection with a first cell (106) using a first access technology;
transmit, to the first cell via the first connection, capability information on communication with a second cell using a second access technology, wherein the second access technology is different from the first access technology,
receive first data from the first cell via the first connection,
receive configuration information related to the second cell using the second access technology, from the first cell via the first connection,
establish a second connection with the second cell using the second access technology based on the configuration information, and
receive second data from the second cell via the second connection while the first data is received from the first cell,
wherein the first cell and the second cell are active for the UE.

4. The UE of claim 3,
wherein a part of the second data is offloaded from a part of the first data.

5. A method of an eNB of a first cell (106) in a communication system, comprising:
establishing (204) a first connection with a user equipment, UE, using a first access technology;
receiving (302), from the UE via the first connection, capability information on communication with a second cell using a second access technology, wherein the second access technology is different from the first access technology;
transmitting (222) first data to the UE via the first connection; and
transmitting (304) configuration information related to the second cell using the second access technology to the UE via the first connection,
wherein the first data is transmitted to the UE via the first connection while a second data is transmitted to the UE from the second cell, via a second connection between the UE and the second cell,
wherein the second connection is established between the UE and the second cell using the second access technology based on the configuration information,
wherein the first cell and the second cell are active for the UE.

6. An eNB of a first cell in a communication system, comprising:
a memory; and
at least one processor coupled to the memory,
wherein the at least one processor is configured to:
establish (204) a first connection with a user equipment, UE, using a first access technology,
receive (302), from the UE via the first connection, capability information on communication with a second cell using a second access technology, wherein the second access technology is different from the first access technology;
transmit (222) first data to the UE via the first connection; and
transmit (304) configuration information related to the second cell using the second access technology to the UE via the first connection,
wherein the first data is transmitted to the UE via the first connection while a second data is transmitted to the UE from the second cell, via a second connection between the UE and the second cell,
wherein the second connection is established between the UE and the second cell using the second access technology based on the configuration information,
wherein the first cell and the second cell are active for the UE.

## Patentansprüche

1. Verfahren eines Benutzergeräts, UE, in einem Kommunikationssystem, welches Folgendes umfasst:
Herstellen (204) einer ersten Verbindung mit einer ersten Zelle (106) unter Verwenden einer ersten Zugangstechnologie;
Übertragen (302) von Fähigkeitsinformationen über die Kommunikation mit einer zweiten Zelle unter Verwenden einer zweiten Zugangstechnologie an die erste Zelle über die erste Verbindung, wobei sich die zweite Zugangstechnologie von der ersten Zugangstechnologie unterscheidet;
Empfangen (222) erster Daten von der ersten Zelle über die erste Verbindung;
Empfangen (304) von Konfigurationsinformationen in Bezug auf die zweite Zelle unter Verwenden der zweiten Zugangstechnologie von der ersten Zelle über die erste Verbindung;
Herstellen (212, 214, 306) einer zweiten Verbindung mit der zweiten Zelle unter Verwenden der zweiten Zugangstechnologie basierend auf den Konfigurationsinformationen; und
Empfangen (226, 316) zweiter Daten von der zweiten Zelle über die zweite Verbindung, während die ersten Daten von der ersten Zelle empfangen werden,
wobei die erste Zelle und die zweite Zelle für das UE aktiv sind.

2. Verfahren nach Anspruch 1,
wobei ein Teil der zweiten Daten von einem Teil der ersten Daten abgeladen wird.

3. Benutzergerät, UE, in einem Kommunikationssystem, welches Folgendes umfasst:
einen Speicher; und
mindestens einen Prozessor, der mit dem Speicher gekoppelt ist,
wobei der mindestens eine Prozessor konfiguriert ist zum:
Herstellen einer ersten Verbindung mit einer ersten Zelle (106) unter Verwenden einer ersten Zugangstechnologie;
Übertragen von Fähigkeitsinformationen über die Kommunikation mit einer zweiten Zelle unter Verwenden einer zweiten Zugangstechnologie an die erste Zelle über die erste Verbindung, wobei sich die zweite Zugangstechnologie von der ersten Zugangstechnologie unterscheidet,
Empfangen erster Daten von der ersten Zelle über die erste Verbindung,
Empfangen von Konfigurationsinformationen in Bezug auf die zweite Zelle unter Verwenden der zweiten Zugangstechnologie von der ersten Zelle über die erste Verbindung,
Herstellen einer zweiten Verbindung mit der zweiten Zelle unter Verwenden der zweiten Zugangstechnologie basierend auf den Konfigurationsinformationen, und
Empfangen zweiter Daten von der zweiten Zelle über die zweite Verbindung, während die ersten Daten von der ersten Zelle empfangen werden,
wobei die erste Zelle und die zweite Zelle für das UE aktiv sind.

4. UE nach Anspruch 3,
wobei ein Teil der zweiten Daten von einem Teil der ersten Daten abgeladen wird.

5. Verfahren eines eNB einer ersten Zelle (106) in einem Kommunikationssystem, welches Folgendes umfasst:
Herstellen (204) einer ersten Verbindung mit einem Benutzergerät, UE, unter Verwenden einer ersten Zugangstechnologie;
Empfangen (302) von Fähigkeitsinformationen über die Kommunikation mit einer zweiten Zelle unter Verwenden einer zweiten Zugangstechnologie von dem UE über die erste Verbindung, wobei sich die zweite Zugangstechnologie von der ersten Zugangstechnologie unterscheidet;
Übertragen (222) erster Daten an das UE über die erste Verbindung; und
Übertragen (304) von Konfigurationsinformationen in Bezug auf die zweite Zelle unter Verwenden der zweiten Zugangstechnologie an das UE über die erste Verbindung,
wobei die ersten Daten über die erste Verbindung an das UE übertragen werden, während zweite Daten von der zweiten Zelle über eine zweite Verbindung zwischen dem UE und der zweiten Zelle an das UE übertragen werden,
wobei die zweite Verbindung zwischen dem UE und der zweiten Zelle unter Verwenden der zweiten Zugangstechnologie basierend auf den Konfigurationsinformationen hergestellt wird,
wobei die erste Zelle und die zweite Zelle für das UE aktiv sind.

6. ENB einer ersten Zelle in einem Kommunikationssystem, welcher Folgendes umfasst:
einen Speicher; und
mindestens einen Prozessor, der mit dem Speicher gekoppelt ist,
wobei der mindestens eine Prozessor konfiguriert ist zum:
Herstellen (204) einer ersten Verbindung mit einem Benutzergerät, UE, unter Verwenden einer ersten Zugangstechnologie,
Empfangen (302) von Fähigkeitsinformationen über die Kommunikation mit einer zweiten Zelle unter Verwenden einer zweiten Zugangstechnologie von dem UE über die erste Verbindung, wobei sich die zweite Zugangstechnologie von der ersten Zugangstechnologie unterscheidet;
Übertragen (222) erster Daten an das UE über die erste Verbindung; und
Übertragen (304) von Konfigurationsinformationen in Bezug auf die zweite Zelle unter Verwenden der zweiten Zugangstechnologie an das UE über die erste Verbindung,
wobei die ersten Daten über die erste Verbindung an das UE übertragen werden, während zweite Daten von der zweiten Zelle über eine zweite Verbindung zwischen dem UE und der zweiten Zelle an das UE übertragen werden,
wobei die zweite Verbindung zwischen dem UE und der zweiten Zelle unter Verwenden der zweiten Zugangstechnologie basierend auf den Konfigurationsinformationen hergestellt wird,
wobei die erste Zelle und die zweite Zelle für das UE aktiv sind.

## Revendications

1. Procédé d'un équipement d'utilisateur, UE, dans un système de communication, comprenant :
établir (204) une première connexion avec une première cellule (106) en utilisant une première technologie d'accès ;
transmettre (302), à la première cellule par la première connexion, des informations de capacité de communication avec une deuxième cellule en utilisant une deuxième technologie d'accès, où la deuxième technologie d'accès est différente de la première technologie d'accès ;
recevoir (222) des premières données en provenance de la première cellule par la première connexion ;
recevoir (304) des informations de configuration relatives à la deuxième cellule en utilisant la deuxième technologie d'accès, à partir de la première cellule par la première connexion ;
établir (212, 214, 306) une deuxième connexion avec la deuxième cellule en utilisant la deuxième technologie d'accès en fonction des informations de configuration; et
recevoir (226, 316) des deuxièmes données en provenance de la deuxième cellule par la deuxième connexion tandis que les premières données sont reçues à partir de la première cellule,
où la première cellule et la deuxième cellule sont actives pour l'UE.

2. Procédé selon la revendication 1,
où une partie des deuxièmes données est déchargée à partir d'une partie des premières données.

3. Équipement d'utilisateur, UE, dans un système de communication, comprenant :
une mémoire ; et
au moins un processeur couplé à la mémoire,
où l'au moins un processeur est configuré pour :
établir une première connexion avec une première cellule (106) en utilisant une première technologie d'accès ;
transmettre, à la première cellule par la première connexion, des informations de capacité de communication avec une deuxième cellule en utilisant une deuxième technologie d'accès, où la deuxième technologie d'accès est différente de la première technologie d'accès,
recevoir des premières données en provenance de la première cellule par la première connexion,
recevoir des informations de configuration relatives à la deuxième cellule en utilisant la deuxième technologie d'accès, à partir de la première cellule par la première connexion,
établir une deuxième connexion avec la deuxième cellule en utilisant la deuxième technologie d'accès en fonction des informations de configuration, et
recevoir des deuxièmes données en provenance de la deuxième cellule par la deuxième connexion tandis que les premières données sont reçues en provenance de la première cellule,
où la première cellule et la deuxième cellule sont actives pour l'UE.

4. UE selon la revendication 3,
où une partie des deuxièmes données est déchargée à partir d'une partie des premières données.

5. Procédé d'un eNB d'une première cellule (106) dans un système de communication, comprenant :
établir (204) une première connexion avec un équipement d'utilisateur, UE, en utilisant une première technologie d'accès ;
recevoir (302), à partir de l'UE par la première connexion, des informations de capacité de communication avec une deuxième cellule en utilisant une deuxième technologie d'accès, où la deuxième technologie d'accès est différente de la première technologie d'accès ;
transmettre (222) des premières données à l'UE par la première connexion ; et
transmettre (304) des informations de configuration relatives à la deuxième cellule en utilisant la deuxième technologie d'accès, à l'UE par la première connexion,
où les premières données sont transmises à l'UE par la première connexion, tandis que des secondes données sont transmises à l'UE à partir de la deuxième cellule, par une deuxième connexion entre l'UE et la deuxième cellule,
où la deuxième connexion est établie entre l'UE et la deuxième cellule en utilisant la deuxième technologie d'accès en fonction des informations de configuration,
où la première cellule et la deuxième cellule sont actives pour l'UE.

6. eNB d'une première cellule dans un système de communication, comprenant :
une mémoire ; et
au moins un processeur couplé à la mémoire,
où l'au moins un processeur est configuré pour :
établir (204) une première connexion avec un équipement d'utilisateur, UE, en utilisant une première technologie d'accès,
recevoir (302), en provenance de l'UE par la première connexion, des informations de capacité de communication avec une deuxième cellule en utilisant une deuxième technologie d'accès, où la deuxième technologie d'accès est différente de la première technologie d'accès ;
transmettre (222) des premières données à l'UE par la première connexion ; et
transmettre (304) des informations de configuration relatives à la deuxième cellule en utilisant la deuxième technologie d'accès, à l'UE par la première connexion,
où les premières données sont transmises à l'UE par la première connexion, tandis que des secondes données sont transmises à l'UE à partir de la deuxième cellule, par une deuxième connexion entre l'UE et la deuxième cellule,
où la deuxième connexion est établie entre l'UE et la deuxième cellule en utilisant la deuxième technologie d'accès en fonction des informations de configuration,
où la première cellule et la deuxième cellule sont actives pour l'UE.
